Europäisches Patentamt

European Patent Office

Office européen des brevets

(19)

(11) **EP 0 794 647 A1**

(12) **DEMANDE DE BREVET EUROPEEN**

(43) Date de publication:
**10.09.1997 Bulletin 1997/37**

(51) Int Cl.6: **H04M 1/00**, G06F 9/44

(21) Numéro de dépôt: **97200632.4**

(22) Date de dépôt: **04.03.1997**

(84) Etats contractants désignés:
**CH DE FR GB LI**

(30) Priorité: **06.03.1996 FR 9602813**

(71) Demandeur: **Philips Electronics N.V.
5621 BA Eindhoven (NL)**

(72) Inventeur: **Terrasson, Jean-François
75008 Paris (FR)**

(74) Mandataire: **Chaffraix, Jean
Société Civile S.P.I.D.
156, Boulevard Haussmann
75008 Paris (FR)**

(54) **Téléphone à écran et procédé de gestion de menu d'un téléphone à écran**

(57)  L'invention a notamment pour but de permettre à l'utilisateur de trouver le plus facilement possible la fonction qu'il recherche dans le menu arborescent.

Pour cela, l'invention consiste à adapter le menu proposé au comportement de l'utilisateur. Pour modéliser ce comportement, l'invention utilise la logique floue.

Référence : figure 1.

Applications: téléphones à écran.

FIG.1

## Description

La présente invention concerne un équipement téléphonique à écran, notamment un radiotéléphone, doté d'une pluralité de fonctions proposées à un utilisateur sous forme d'un menu arborescent.

L'invention concerne également un procédé de gestion d'un menu arborescent d'un équipement téléphonique à écran, ledit menu proposant une pluralité de fonctions à un utilisateur.

Les téléphones à écran actuellement disponibles dans le commerce offrent une variété de fonctions d'utilisation de plus en plus grande à l'utilisateur. Dans le cas d'un radiotéléphone par exemple, il est courant de proposer à l'utilisateur des fonctions messagerie, transfert d'appel, réglage d'un certain nombre de paramètres de fonctionnement du radiotéléphone (choix de la sonnerie, du langage d'affichage des messages, du message de bienvenue...).

Parallèlement la tendance actuelle est de miniaturiser au maximum ce type d'appareils grand public. Les écrans de ces téléphones sont donc de taille limitée ce qui conduit, pour l'utilisateur, à une certaine complexité de manipulation de l'interface homme/machine. Pour des radiotéléphones par exemple, on ne dispose que de quelques lignes sur l'écran pour afficher le menu arborescent de telle sorte que l'utilisateur risque de se perdre lorsque le menu est important.

Pour faciliter la manipulation du menu arborescent par l'utilisateur, dans certains appareils actuellement disponibles dans le commerce, les fonctions qui ne sont pas disponibles pour l'utilisateur apparaissent rayées d'un trait sur l'écran de l'appareil (certaines fonctions peuvent en effet ne pas être disponibles selon la nature des droits de l'utilisateur ou selon le type d'abonnement qu'il a contracté).

Le but de la présente invention est de proposer une solution permettant d'améliorer nettement la manipulation par l'utilisateur d'un tel menu arborescent.

Pour cela, un équipement téléphonique à écran tel que décrit dans le paragraphe introductif est caractérisé en ce qu'il comporte:

- des moyens de modélisation du comportement de l'utilisateur lorsqu'il parcourt ledit menu,
- des moyens d'adaptation dudit menu pour tenir compte dudit comportement.

Dans un premier mode réalisation, un équipement téléphonique à écran selon l'invention comporte:

- des moyens de calcul, à partir dudit comportement, de l'importance relative pour l'utilisateur d'au moins certaines fonctions proposées,
- des moyens de ré-ordonnancement desdites fonctions dans le menu en fonction de leur importance relative.

Le menu propose donc les fonctions par ordre d'importance pour l'utilisateur. Sa manipulation en est ainsi facilitée.

Dans un second mode de réalisation, un équipement téléphonique à écran selon l'invention, doté d'une pluralité de niveaux d'aide de l'utilisateur, comporte:

- des moyens de calcul, à partir dudit comportement, de l'agilité de l'utilisateur,
- des moyens de sélection d'un niveau d'aide adapté à l'agilité de l'utilisateur.

On propose ainsi à l'utilisateur une aide d'autant plus complète que son agilité est faible.

De façon particulièrement avantageuse, le comportement de l'utilisateur est modélisé au moins par un premier ensemble de paramètres d'entrée, dits paramètres principaux, représentatifs du taux de sélection d'au moins certaines fonctions par l'utilisateur, et par un second ensemble de paramètres d'entrée, dits paramètres de pondération, représentatifs de l'inexpérience de l'utilisateur dans la manipulation du menu.

Ainsi dans le premier mode de réalisation de l'invention, les fonctions sélectionnées le plus fréquemment ont une importance relative élevée, mais l'importance relative d'une fonction est diminuée lorsque l'utilisateur qui l'a sélectionnée est inexpérimenté. Dans ce cas en effet, il est très probable que l'appareil ait été prêté à un utilisateur qui n'est pas l'utilisateur habituel. Il n'est alors pas souhaitable que l'arborescence du menu se trouve radicalement modifiée. Et dans le second mode de réalisation, l'agilité de l'utilisateur pour une fonction déterminée est d'autant plus importante que la fonction est sélectionnée fréquemment, mais elle est d'autant plus faible que l'utilisateur est inexpérimenté.

De façon avantageuse, ledit paramètre de pondération est représentatif du nombre de retours effectués par l'utilisateur dans l'arborescence du menu avant d'effectuer une sélection dans le menu.

En effet l'utilisateur inexpérimenté risque de se tromper dans la recherche d'une fonction est sera donc amené à effectuer des retours en arrière dans l'arborescence du menu. Ce paramètre de pondération est donc particulièrement significatif de l'inexpérience de l'utilisateur.

Enfin, les moyens de calcul de l'importance relative d'une fonction et/ou de l'agilité de l'utilisitateur utilisent avantageusement une logique floue.

En effet, les techniques de logique floue sont particulièrement bien adaptées à la modélisation du comportement humain.

L'invention sera mieux comprise et d'autres détails apparaîtront dans la description qui va suivre en regard des dessins annexés qui sont donnés à titre d'exemple non limitatif, dans lesquels:

- la figure 1 représente un exemple de téléphone à écran selon l'invention,
- la figure 2 est un schéma synoptique décrivant, relativement à l'invention, le fonctionnement d'un tel téléphone,
- la figure 3 représente les fonctions d'appartenance définies pour le calcul flou,
- la figure 4 est un schéma explicatif des calculs effectués par le module de logique floue représenté sur la figure 2,
- la figure 5 est un organigramme décrivant un procédé de gestion d'un menu arborescent d'un équipement téléphonique à écran selon l'invention.

On va maintenant décrire en détails un exemple relatif au premier mode de réalisation de l'invention. Les principes mis en oeuvre sont applicables de la même façon au second mode de réalisation.

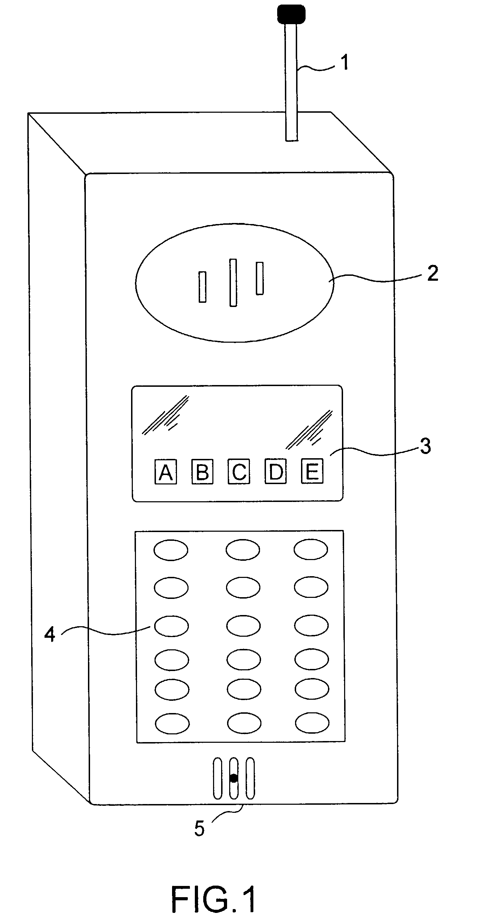

La figure 1 représente un exemple d'équipement de télécommunications à écran selon l'invention. Cet équipement comporte notamment une antenne 1, un haut-parleur/écouteur 2, un écran 3, un clavier 4 et un microphone 5. Cinq entrées principales dans le menu, référencées A à E sont affichées sur la ligne inférieure de l'écran 3.

Un exemple de menu arborescent est donné ci-dessous à titre d'exemple pour un radiotéléphone:

Entrée A: Réglage des paramètres

```
→ Langage d'affichage    → français
                         → anglais
                         → ...
→ Eclairage de l'écran
→ Type de sonnerie       → sonnerie S1
                         → sonnerie S2
                         → sonnerie S3
→ Volume de la sonnerie
→ Message de bienvenue
→ Indicateur de batteries déchargées    → "ON"
                                         → "OFF"
→ Beep sonore associé aux touches        → "ON"
                                         → "OFF"
```

Entrée B: Messagerie

→ Boîte vocale
→ Lecture des nouveaux messages
→ Lecture de tous les messages
→ Création d'un message
→ Envoi d'un message
→ Modification d'un message
→ Destruction d'un message

Entrée C: Paramètres d'appel

→ Dernier appel
→ Durée de l'appel
→ Durée de l'appel en ligne
→ Coût de l'appel

Entrée D: Services

→ Identification d'appel
→ Emission
→ Barrage
→ Attente d'appel

Entrée E: Sécurité

→ Saisie du code d'accès
→ Changement du code d'accès
→ Verrouillage du clavier
→ Restriction d'appel

Ce menu comporte donc 3 niveaux de fonctions: le premier niveau correspond aux entrées A à E, le second niveau correspond aux actions possibles et le troisième niveau aux différentes options disponibles pour chaque action. L'utilisateur est donc amené à se déplacer dans l'arborescence du menu pour réaliser l'opération désirée. Dans la suite de la description on considère que l'utilisateur effectue une sélection lorsqu'il se déplace d'un niveau 2 à un niveau 3 dans l'arborescence. Et dans l'exemple décrit, pour la clareté de l'exposé, on se limite à un ré-ordonnancement entre les entrées.

Un des buts de la présente invention est de permettre à l'utilisateur de trouver le plus facilement possible la fonction qu'il recherche dans le menu arborescent. Pour cela, l'invention consiste notamment à modifier l'ordonnancement du menu afin de proposer en premier à l'utilisateur les entrées correspondant aux fonctions qu'il utilise le plus souvent, l'arborescence devant toutefois rester suffisamment stable pour ne pas perturber l'utilisateur. De plus l'invention se propose de tenir compte du fait que l'équipement téléphonique est susceptible d'être prêté à un autre utilisateur. Dans un tel cas, l'ordonnancement du menu ne doit pas être radicalement modifié.

Afin de prendre en compte ces différentes contraintes, l'invention consiste dans un premier temps à modéliser le comportement de l'utilisateur. Pour cela deux paramètres sont définis. Le premier paramètre, dit paramètre principal et noté $S(k)$, est représentatif du taux de sélection de l'entrée $k$ par l'utilisateur. Le second paramètre, dit paramètre de pondération et noté $R(k)$, est représentatif de l'inexpérience de l'utilisateur, relativement à l'entrée $k$. Dans l'exemple décrit le paramètre de pondération choisi dépend du nombre de retours en arrière effectués par l'utilisateur avant d'effectuer une sélection. Les formules de calcul de ces deux paramètres sont données dans la suite de la description. Le comportement de l'utilisateur étant ainsi modélisé, l'invention consiste alors à adapter le menu proposé en conséquence. Dans l'exemple qui va être décrit, on élabore à partir des paramètres $S(k)$ et $R(k)$ un paramètre $FIT(k)$ représentatif de l'importance relative pour l'utilisateur de l'entrée $k$.

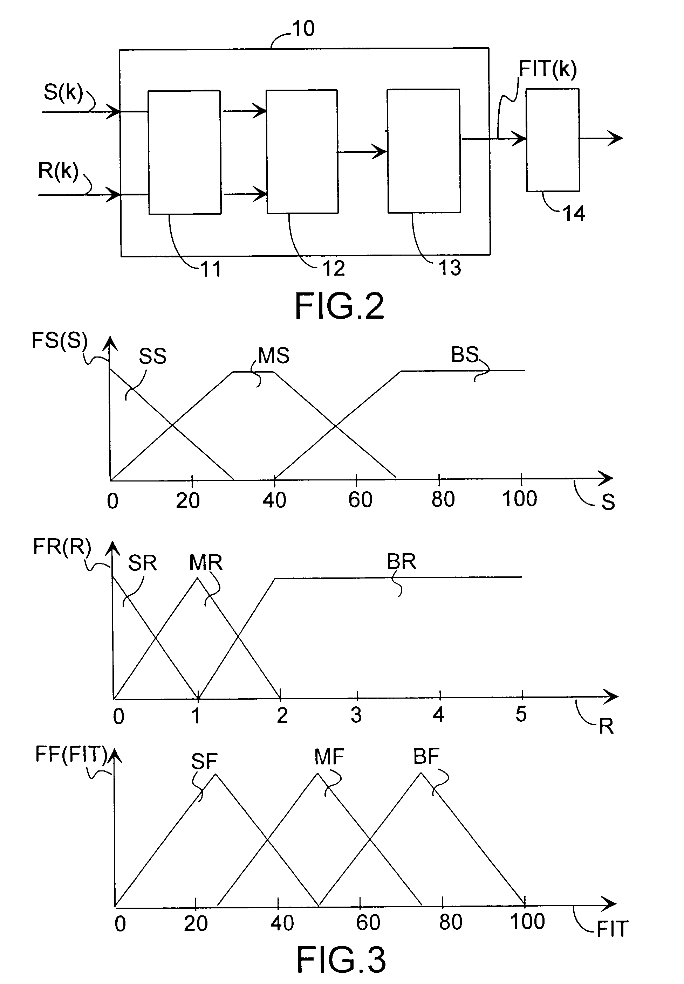

La figure 2 est un schéma synoptique décrivant le fonctionnement d'un équipement téléphonique selon l'invention.

D'après la figure 2, lorsque l'utilisateur effectue une sélection (passage d'un niveau 2 à un niveau 3 dans le menu arborescent), les paramètres $S(k)$ et $R(k)$ relatifs à toutes les entrées du menu sont calculés puis transmis à un module de calcul à base de logique floue 10. Ce module 10 élabore à partir de chaque couple de paramètres $[S(k), R(k)]$ un paramètre de sortie $FIT(k)$ qui correspond à l'importance relative de l'entrée $k$. Ce module de calcul 10 se composent de trois blocs fonctionnels notés 11, 12 et 13 et appelés respectivement bloc de "fuzzification", moteur d'inférence et bloc de "defuzzification".

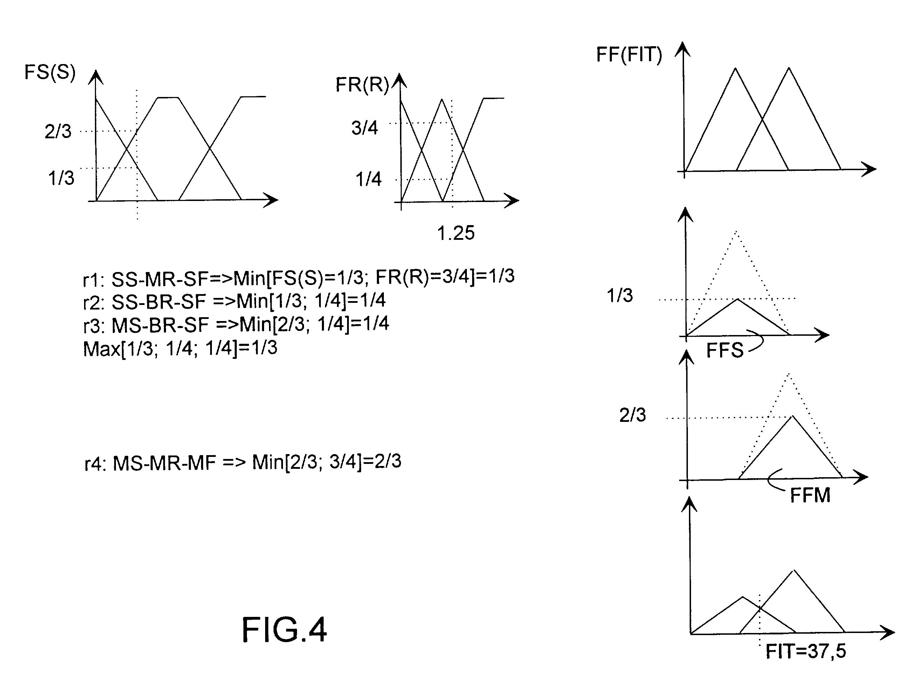

Les variables de sortie $FIT(k)$ sont ensuite fournies à un comparateur 14. Seules les comparaisons dont le résultat est supérieur à un seuil prédéterminé conduisent à une décision non nulle en sortie du comparateur, c'est-à-dire à un ré-ordonnancement du menu. Dans la pratique, lorsque le paramètre FIT varie entre 0 et 100 (comme c'est le cas dans l'exemple décrit sur les figures 3 et 4), le seuil du comparateur est par exemple fixé à 15.

On va maintenant décrire le comportement et le fonctionnement du module de calcul 10 à l'aide des figures 3 et 4.

La logique floue consiste à classifier les trois paramètres $S(k)$, $R(k)$ et $FIT(k)$ par ordre de grandeur. Dans l'exemple décrit chacun de ces paramètres peut appartenir à trois ensembles flous différents. Sur les figures 3 et 4 ces ensembles sont référencés par deux lettres: la première lettre S, M ou B indique si l'ensemble correspond à une valeur petite, moyenne ou grande du paramètre; et la seconde lettre S, R ou F indique le paramètre en cause $S(k)$, $R(k)$ ou $FIT(k)$ respectivement. En logique floue, un paramètre peut appartenir à plusieurs ensembles avec des degrés d'appartenance différents ce qui permet d'obtenir une transition progressive entre états. Les différents ensembles définis pour chacun des trois paramètres se superposent donc.

Pour définir les ensembles associés à chaque paramètre, on utilise une fonction dite fonction d'appartenance. Ces fonctions sont respectivement notées FS, FR et FF pour les paramètres $S(k)$, $R(k)$ et $FIT(k)$.

Les fonctions d'appartenance choisies pour la présente invention sont représentées sur les figures 3 et 4. Ces fonctions ont la forme de triangles et/ou de trapèzes dont les sommets correspondent aux points suivants:

- {[(0, 1); (30, 0)] - [(0, 0); (30, 1); (40, 1); 70,0)] - [(40, 0); (70, 1); prolongé par la droite d'équation y=1]} pour la fonction FS,
- {[(0, 1); (1, 0)] - [(0, 0); (1, 1); (2, 0)] - [(1, 0); (2, 1); prolongé par la droite d'équation y=1]} pour la fonction FR,
- {[(0, 0); (25, 1); (50, 0)] - [(25, 0); (50, 1); (75, 0)] - [(50, 0); (75, 1); (100, 0)]} pour la fonction FF.

Le bloc de "fuzzification" 11 détermine le degré d'appartenance des paramètres d'entrée S(k) et R(k) aux ensembles flous ainsi définis.

Au niveau du moteur d'inférence 12, des règles sont définies pour déterminer l'ensemble d'appartenance du paramètre de sortie FIT(k) en fonction des ensembles d'appartenance des paramètres d'entrée S(k) et R(k). Les règles choisies dans cet exemple de réalisation sont indiquées dans le tableau suivant.

| | SS | MS | BS |
|---|---|---|---|
| SR | MF | BF | BF |
| MR | SF | MF | BF |
| BR | SF | SF | MF |

Ces règles de base ont été choisies de telle sorte que le paramètre FIT(k) soit d'autant plus élevé que le paramètre S(k) est élevé, et d'autant plus faible que le paramètre R(k) est élevé. En effet lorsque l'utilisateur est perdu dans le menu, c'est-à-dire lorsqu'il fait un nombre important de retours en arrière, il ne faut pas attribuer une trop grande importance à la fonction sélectionnée. En effet, un tel comportement prouve que l'utilisateur n'a pas l'habitude de sélectionner cette fonction, ou qu'il ne s'agit pas de l'utilisateur habituel de l'équipement. En revanche, si l'utilisateur atteint directement la fonction sélectionnée, il faut lui donner une forte importance.

Pour chaque règle applicable (ensembles d'entrée → ensemble de sortie), le degré d'appartenance à l'ensemble de sortie est égal au minimum des degrés d'appartenance des paramètres d'entrée S(k) et R(k) aux ensembles d'entrée. Le moteur d'inférence retient, pour chaque ensemble de sortie obtenu, le degré d'appartenance maximum. Il déduit alors de ce degré d'appartenance maximum et de la fonction d'appartenance FF une fonction de sortie notée FFS, FFM ou FFB selon l'ensemble S, M ou B considéré.

Le bloc 13 de "defuzzification" détermine alors le paramètre de sortie FIT(k) en calculant le centre de gravité des fonctions de sortie. Le paramètre FIT(k) correspond à l'abscisse de ce centre de gravité.

La figure 4 donne un exemple de calcul d'un paramètre FIT(k) de sortie. Dans cet exemple, les paramètres d'entrée S(k) et R(k) ont les valeurs suivantes:

$$S(k)=20$$

$$R(k)=1.25$$

Les degrés d'appartenance du paramètre S(k) aux ensembles SS et MS sont donc respectivement égaux à 1/3 et 2/3. De même les degrés d'appartenance du paramètre R(k) aux ensembles MR et BR sont respectivement égaux à 3/4 et 1/4. Les quatre règles applicables sont donc les suivantes:

Règle r1 : si SS et MR alors SF
Règle r2 : si SS et BR alors SF
Règle r3 : si MS et BR alors SF
Règle r4 : si MS et MR alors MF

Pour chacune de ces règles le degré d'appartenance à l'ensemble de sortie est égal au minimum des degrés d'appartenance des paramètres d'entrée aux ensembles d'entrée. On obtient ainsi pour les règles r1 à r4 respectivement un degré d'appartenance égal à 1/3, 1/4, 1/4 et 2/3.

Les degrés d'appartenance maximum obtenus pour les ensembles de sortie SF et MF sont donc respectivement 1/3 et 2/3. On en déduit alors les fonctions de sortie FFS et FFM représentée sur la partie droite de la figure 4. Ces fonctions ont la forme de triangles isocèles dont les sommets correspondent respectivement aux points suivants:

$$\{(0,0); (25,1/3); (50, 0)\} \text{ pour la fonction FFS}$$

$$\{(25,0); (50, 2/3); (75,0)\} \text{ pour la fonction FFM.}$$

Le paramètre de sortie FIT(k) est donné par l'abscisse du centre de gravité des fonctions de sortie. On obtient donc FIT(k)=37,5.

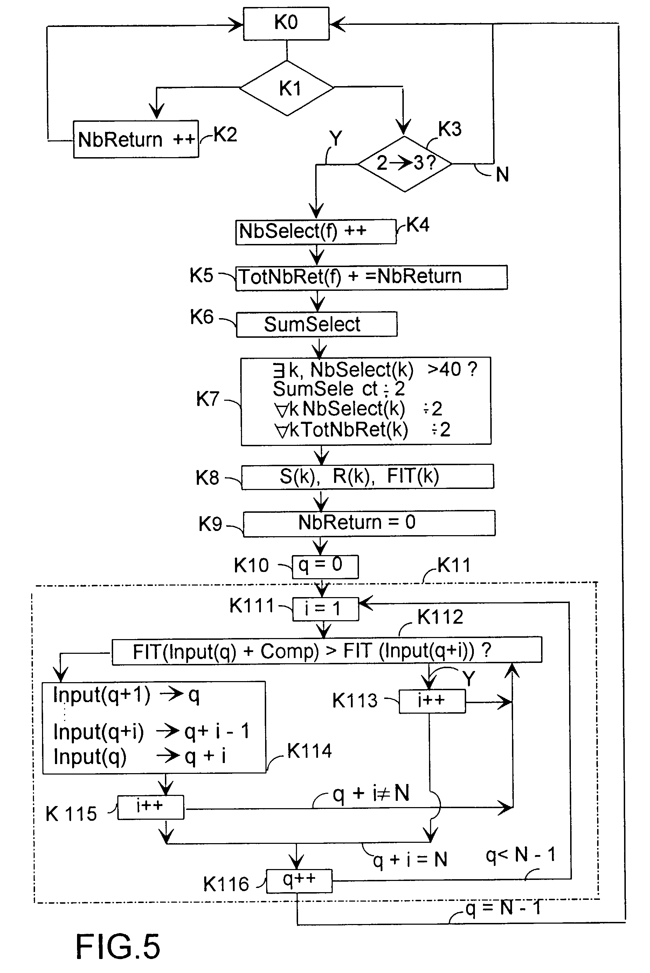

On va maintenant décrire à l'aide de la figure 5 le procédé selon l'invention.

Lorsque l'utilisateur se déplace dans le menu (passage de la case K0 à la case K1 de l'organigramme) on réalise un test (case K1) pour déterminer si ce déplacement correspond à un retour en arrière dans l'arborescence du menu. Dans ce cas, une variable **NbReturn** est incrémentée d'une unité (case K2), puis le procédé reprend à la case K0. Sinon, un test est réalisé à la case K3 pour déterminer s'il s'agit d'un passage du niveau 2 au niveau 3 dans l'arborescence du menu. Une telle transition constitue en effet une sélection. L'entrée correspondante dans l'arbre des menus est notée **f**. Si le déplacement de l'utilisateur ne correspond pas à une transition du niveau 2 au niveau 3, le procédé reprend à la case K0. Sinon, il se poursuit à la case K4.

A la case K4, le nombre de sélection de l'entrée f, noté **NbSelect(f),** est incrémenté d'une unité. Puis, à la case K5, on additionne la variable NbReturn au nombre total de retours effectués pour sélectionner l'entrée f. Sur la figure 5 ce nombre total de retours pour l'entrée f est noté **TotNbRet(f)**. A la case K6 on calcule alors le nombre total de sélections, noté **SumSelect**, qui est égal à la somme des nombres de sélections de toutes les entrées du menu:

$$SumSelect = \Sigma_k \, NbSelect(k)$$

A la case K7, si le nombre de sélection NbSelect(k) pour une entrée k du menu est supérieur à un seuil fixé (40 par exemple), on divise par deux les paramètres SumSelect, NbSelect(k) et TotNbRet(k) pour toutes les entrées k afin d'éviter une saturation du système. Le procédé se poursuit ensuite à la case K8. Pour chaque entrée k du menu, on y calcule:

- le paramètre principal **S(k)**:

$$S(k) = \frac{NbSelect(k)}{SumSelect}$$

- le paramètre de pondération **R(k)**:

$$R(k) = \frac{TotNbRet(k)}{NbSelect(k)}$$

- le paramètre de sortie **FIT(k)** qui est calculé comme cela a été exposé précédemment à l'aide des figures 3 et 4.

Puis, à la case K9, la variable NbReturn est remise à zéro.

Le procédé se poursuit à la case K10, pour comparer les valeurs des paramètres de sortie obtenus pour les différentes entrées du menu. Lorsqu'une entrée **Input(rg1)** de rang rg1 inférieur à rg2, a une valeur FIT(Input(rg1)) inférieure à la valeur (FIT(Input(rg2))+Comp) d'une entrée Input(rg2) de rang rg2, on effectue un ré-ordonnancement du menu (Comp est un nombre fixe qui permet d'imposer une différence suffisamment importante entre FIT(Input(rg1)) et FIT(Input(rg2)) avant d'effectuer le ré-ordonnancement). Ainsi, à la case K10, une variable de boucle **q** est initialisée à zéro. Le procédé consiste alors à exécuter le contenu de la case K11, tant que la valeur de cette variable de boucle q est différente de (N-1), N étant égal au nombre d'entrées dans le menu.

La case K11 regroupe plusieurs étapes numérotées K111 à K116. A la case K111, une seconde variable de boucle i est initialisée à un. Tant que (q+i) est différent de N, on effectue le contenu des cases K112 à K115. A la case K112, on effectue la comparaison suivante:

$$FIT(Input(q)) + Comp > FIT(Input(q+i))?$$

Si le résultat de cette comparaison est positif le procédé se poursuit à la case K113. Sinon, il se poursuit à la case K114. A la case K113, la variable de boucle i est incrémentée d'un unité, puis le procédé reprend à la case K112. A la case K114, on effectue un ré-ordonnancement du menu: les entrées Input(q+1) à Input(q+i) sont décalées d'un cran vers la gauche dans le menu, c'est-à-dire que leur rang est décrémenté d'une unité. Et l'entrée Input(q) est transférée au rang q+i. Puis, à la case K115, la variable de boucle i est initialisée à un, et le procédé reprend à la case K112.

Lorsque (q+i) est égal à N, on sort de la boucle K112 à K115, et le procédé se poursuit à la case K116. A la case K116, la variable de boucle q est incrémentée, et le procédé reprend à la case K111. Lorsque la variable q est égale à N-1, on sort de la boucle K11, et le procédé reprend à la case K0.

Le procédé qui vient d'être décrit est avantageusement mis en oeuvre, dans un équipement de télécommunications à écran doté d'un microprocesseur, sous forme d'un programme. A titre d'exemple, on peut utiliser un microprocesseur du type 68000 de Motorola, et un langage de programmation tel que le langage C.

L'homme du métier disposant de connaissances générales en matière de programmation est capable d'effectuer une telle mise en oeuvre.

La description qui vient d'être faite est applicable au second mode de réalisation de l'invention conformément auquel on propose à l'utilisateur une aide adaptée à son comportement. Dans ce mode de réalisation, les paramètres d'entrées sont utilisés pour déterminer l'agilité de l'utilisateur qui est classifiée parmi trois niveaux: Novice, Intuitif ou Expert.

Il va de soi que des modifications peuvent être apportées au mode de réalisation préférentiel qui vient d'être décrit sans que l'on sorte du cadre de la présente invention.

Il est notamment possible de définir d'autres paramètres pour modéliser le comportement de l'utilisateur. Par exemple le paramètre de pondération peut tenir compte des lectures multiples d'un item du menu, de la rapidité de sélection d'une fonction, du temps d'appui sur les touches, ou d'une combinaison de ces différents paramètres...

Il est également possible d'utiliser un nombre de sous-ensembles flous supérieur à trois ce qui aura toutefois pour conséquence d'accroître la complexité de calcul.

De plus, bien que dans cet exemple de réalisation on se soit limité à un ré-ordonnancement entre les entrées de niveau 1 du menu arborescent, il est possible de l'étendre à tous les niveaux de l'arborescence.

## Revendications

1. Equipement téléphonique à écran, doté d'une pluralité de fonctions proposées à un utilisateur sous forme d'un menu arborescent, caractérisé en ce qu'il comporte:

   - des moyens de modélisation (S(k), R(k)) du comportement de l'utilisateur lorsqu'il parcourt ledit menu,
   - des moyens d'adaptation dudit menu pour tenir compte dudit comportement.

2. Equipement selon la revendication 1, caractérisé en ce qu'il comporte:

   - des moyens de calcul (K3 à K7), à partir dudit comportement, de l'importance relative (FIT(k)) pour l'utilisateur d'au moins certaines fonctions proposées,
   - des moyens de ré-ordonnancement (K104) desdites fonctions dans le menu en fonction de leur importance relative.

3. Equipement selon l'une des revendications 1 ou 2, doté d'une pluralité de niveaux d'aide de l'utilisateur, caractérisé en ce qu'il comporte:

   - des moyens de calcul, à partir dudit comportement, de l'agilité de l'utilisateur,
   - des moyens de sélection d'un niveau d'aide adapté à l'agilité de l'utilisateur.

4. Equipement selon l'une des revendications 1 à 3, caractérisé en ce que le comportement de l'utilisateur est modélisé au moins par un premier ensemble de paramètres d'entrée (S(k)), dits paramètres principaux, représentatifs du taux de sélection d'au moins certaines fonctions (k) par l'utilisateur, et par un second ensemble de paramètres d'entrée (R(k)), dit paramètres de pondération, représentatifs de l'inexpérience de l'utilisateur dans la manipulation du menu.

5. Equipement selon la revendication 4, caractérisé en ce que ledit paramètre de pondération (R(k)) est représentatif du nombre de retours effectués par l'utilisateur dans l'arborescence du menu avant d'effectuer une sélection dans le menu.

**6.** Equipement selon l'une des revendications 2 à 5, caractérisé en ce que lesdits moyens de calcul utilisent une logique floue.

**7.** Radiotéléphone selon l'une des revendications 1 à 6.

**8.** Procédé de gestion d'un menu arborescent d'un équipement téléphonique à écran, ledit menu proposant une pluralité de fonctions à un utilisateur, caractérisé en ce qu'il consiste à:

- modéliser le comportement de l'utilisateur lorsqu'il parcourt ledit menu,
- adapter ledit menu pour tenir compte dudit comportement.

**9.** Procédé selon la revendication 8, caractérisé en ce qu'il consiste à:

- calculer, en tenant compte dudit comportement, l'importance relative pour l'utilisateur d'au moins certaines fonctions proposées,
- ré-ordonnancer lesdites fonctions dans le menu en fonction de leur importance relative.

**10.** Procédé selon l'une des revendications 8 ou 9, pour gérer un équipement téléphonique à écran doté d'une pluralité de niveaux d'aide à l'utilisateur, caractérisé en ce qu'il consiste:

- à calculer, à partir dudit comportement, l'agilité de l'utilisateur,
- sélectionner un niveau d'aide adapté à l'agilité de l'utilisateur.

**11.** Procédé selon l'une des revendications 8 à 10, caractérisé en ce que le comportement de l'utilisateur est modélisé au moins par un premier ensemble de paramètres d'entrée $(S(k))$, dits paramètres principaux, représentatifs du taux de sélection d'au moins certaines fonctions $(k)$ par l'utilisateur, et par un second ensemble de paramètres d'entrée $(R(k))$, dit paramètres de pondération, représentatifs de l'inexpérience de l'utilisateur dans la manipulation du menu.

**12.** Procédé selon la revendication 11, caractérisé en ce que ledit paramètre de pondération est représentatif du nombre de retours effectués par l'utilisateur dans l'arborescence du menu avant d'effectuer une sélection dans le menu.

**13.** Procédé selon l'une des revendications 8 à 12, caractérisé en ce que lesdits calculs utilisent une logique floue.

FIG.1

FIG.2

FIG.3

FIG.4

EP 0 794 647 A1

K0

K1

NbReturn ++ ─K2

K3
2→3?
Y          N

NbSelect(f) ++ ─K4

K5 ─ TotNbRet(f) + =NbReturn

K6 ─ SumSelect

K7 ─ $\exists k, NbSelect(k) > 40 ?$
SumSele ct ÷ 2
$\forall k NbSelect(k) ÷ 2$
$\forall k TotNbRet(k) ÷ 2$

K8 ─ S(k), R(k), FIT(k)

K9 ─ NbReturn = 0

K10 ─ q = 0          K11

K111 ─ i = 1          K112

FIT(Input(q) + Comp) > FIT (Input(q+i)) ?

Input(q+1) → q

Input(q+i) → q+ i - 1
Input(q) → q + i          K114

K113          i++          Y

K 115          i++          q + i≠ N

q + i = N          q< N - 1

K116 ─ q++

q = N - 1

FIG.5

**Office européen**
**des brevets**

**RAPPORT DE RECHERCHE EUROPEENNE**

Numero de la demande

EP 97 20 0632

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO 92 01983 A (FRAUNHOFER GESELLSCHAFT ZUR FÖRDERUNG DER ANGEWANDTEN FORSCHUNG E.V.) * page 1 - page 4; figures 1-3 * | 1-3,8-10 | H04M1/00 G06F9/44 |
| X A | EP 0 292 934 A (FUJITSU LTD) * colonne 3, ligne 45 - colonne 10, ligne 27; figures 1-15 * | 1,3,8,10 2,9 | |
| X A | EP 0 269 364 A (AMERICAN TELEPHONE & TELEGRAPH) * colonne 2, ligne 34 - colonne 7, ligne 50; figures 1-4 * | 1,8 2,3,9,10 | |
| A | EP 0 579 501 A (INSTITUTE FOR PERSONALIZED INFORMATION) * colonne 5, ligne 44 - colonne 15, ligne 22; figures 1-8 * | 1-4,8-11 | |
| A | EP 0 323 381 A (IBM) * page 3, ligne 35 * | 1,3-5,8, 10-12 | |
| A | EP 0 367 709 A (IBM) * colonne 5, ligne 1 - colonne 8, ligne 44; figures 1-12 * | 1-3,8-10 | **DOMAINES TECHNIQUES RECHERCHES (Int.Cl.6)** H04M G06F |
| A | US 5 042 006 A (FLOHRER) * colonne 2, ligne 19 - colonne 6, ligne 22; figures 1-4 * | 1-3,8-10 | |
| A | GB 2 162 393 A (PLESSEY THE COMPANY PLC) * le document en entier * | 1,7,8 | |

Le présent rapport a été établi pour toutes les revendications

| Lieu de la recherche | Date d'achèvement de la recherche | Examinateur |
|---|---|---|
| LA HAYE | 17 Juin 1997 | Delangue, P |